# EUROPEAN PATENT APPLICATION

(11) **EP 4 564 715 A1**
(43) Date of publication of application: **04.06.2025**
(21) Application number: 22952258.6
(22) Date of filing: 26.07.2022
(51) Int. Cl.: H04L 5/00, G06N 3/00

(54) **CHANNEL STATE INFORMATION (CSI) FEEDBACK METHOD, TERMINAL DEVICE AND NETWORK DEVICE**

(71) Applicant: GUANGDONG OPPO MOBILE TELECOMMUNICATIONS CORP., LTD., Dongguan, Guangdong 523860 (CN)
(72) Inventor: LIU, Wendong, Dongguan, Guangdong 523860 (CN)
(74) Representative: RGTH
(86) International application number: PCT/CN2022/107982
(87) International publication number: WO 2024/020793

(57) **Abstract**

There are a channel state information (CSI) feedback method, a terminal device and a network device, and the method includes: processing, by a terminal device, first input information to obtain target input information, where the first input information is CSI data obtained based on a target configuration, and a dimension of the target input information is the same as a dimension of CSI data obtained based on a reference configuration; encoding the target input information based on an encoder to obtain a target bit stream; and transmitting the target bit stream to a network device; where the encoder includes an adaptation layer, an input dimension of the adaptation layer is an output dimension of a first network, an output dimension of the adaptation layer is determined according to a length of a bit stream that needs to be fed back under the target configuration, and the first network is a higher level network of the adaptation layer in the encoder.

## Description

### TECHNICAL FIELD

Embodiments of the present disclosure relate to the field of communications, and in particular, to a channel state information (CSI) feedback method, a terminal device and a network device.

### BACKGROUND

In the related technologies, an artificial intelligence (Artificial Intelligence, AI)-based channel state information (CSI) autoencoder may be used for CSI feedback. The CSI autoencoder used in the feedback solution needs to be trained on a large-scale dataset. During a deployment process, the number of antenna ports and the number of sub-bands actually configured need to be consistent with the dataset used when training the model, otherwise the CSI autoencoder cannot be used for the CSI feedback, and thus, the flexibility of the AI-based CSI feedback solution is reduced.

### SUMMARY

The present disclosure provides a channel state information (CSI) feedback method, a terminal device and a network device, which can adapt to CSI feedback under multiple physical resource configurations at a relatively small model update cost, thereby improving the flexibility and generalization performance of AI-based feedback.

In a first aspect, a channel state information (CSI) feedback method is provided, and includes: processing, by a terminal device, first input information to obtain target input information, where the first input information is CSI data obtained based on a target configuration, and a dimension of the target input information is the same as a dimension of CSI data obtained based on a reference configuration; encoding the target input information based on an encoder to obtain a target bit stream; and transmitting the target bit stream to a network device; where the encoder includes an adaptation layer, an input dimension of the adaptation layer is an output dimension of a first network, an output dimension of the adaptation layer is determined according to a length of a bit stream that needs to be fed back under the target configuration, and the first network is a higher level network of the adaptation layer in the encoder.

In a second aspect, a channel state information (CSI) feedback method is provided, and includes: receiving, by a network device, a target bit stream transmitted by a terminal device, where the target bit stream is a bit stream that needs to be fed back under a target configuration; decoding the target bit stream based on a decoder to obtain first output information, where a dimension of the first output information is the same as a dimension of CSI data obtained based on a reference configuration; and processing the first output information to obtain target output information, where a dimension of the target output information is the same as a dimension of CSI data obtained based on the target configuration; where the decoder includes an adaptation layer, an input dimension of the adaptation layer is determined according to a length of the bit stream that needs to be fed back under the target configuration, an output dimension of the adaptation layer is an input dimension of a second network, and the second network is a lower level network of the adaptation layer in the decoder.

In a third aspect, a channel state information (CSI) feedback method is provided, and includes: receiving, by a terminal device, fourth indication information transmitted by a network device, where the fourth indication information is used to indicate whether an encoder deployed on the terminal device supports CSI data with multiple dimensions.

In a fourth aspect, a channel state information (CSI) feedback method is provided, and includes: transmitting, by a network device, fourth indication information to a terminal device, where the fourth indication information is used to indicate whether an encoder deployed on the terminal device supports CSI data with multiple dimensions.

In a fifth aspect, a terminal device is provided, and is configured to perform the method in the above first aspect or its various implementations.

Specifically, the terminal device includes a functional module configured to perform the method in any one of the above first aspect or third aspect or their various implementations.

In a sixth aspect, a network device is provided, and is configured to perform the method in the above second aspect or its various implementations.

Specifically, the network device includes a functional module configured to perform the method in the above second aspect or fourth aspect or their various implementations.

In a seventh aspect, a terminal device is provided, and the terminal device includes: a processor and a memory. The memory is configured to store a computer program, and the processor is configured to call and run the computer program stored in the memory, to perform the method in any one of the above first aspect or third aspect or their various implementations.

In an eighth aspect, a network device is provided, and the network device includes: a processor and a memory. The memory is configured to store a computer program, and the processor is configured to call and run the computer program stored in the memory, to perform the method in the above second aspect or fourth aspect or their various implementations.

In a ninth aspect, a chip is provided, and is configured to implement the method in any one of the above first to fourth aspects or various implementations thereof. Specifically, the chip includes a processor, and the processor is configured to call a computer program from a memory and run the computer program, to cause a device equipped with the apparatus to perform the method in any one of the above first to fourth aspects or various implementations thereof.

In a tenth aspect, a computer-readable storage medium is provided, and is configured to store a computer program. The computer program causes a computer to perform the method in any one of the above first to fourth aspects or various implementations thereof.

In an eleventh aspect, a computer program product is provided, and includes computer program instructions. The computer program instructions cause a computer to perform the method in any one of the above first to fourth aspects or various implementations thereof.

In a twelfth aspect, a computer program is provided, and the computer program, when executed on a computer, causes the computer to perform the method in any one of the above first to fourth aspects or various implementations thereof.

Based on the above technical solutions, the design solution of an adaptation layer-based CSI autoencoder adapts CSI data with variable dimensions by designing an adaptation layer. In a case where the configuration is updated, there is no need to perform a large number of model updates, and only the model of the adaptation layer needs to be updated, which enables the AI-based CSI feedback solution to adapt to CSI feedback under multiple physical resource configurations at a relatively small model update cost, thereby improving the flexibility and generalization performance of AI-based feedback.

### BRIEF DESCRIPTION OF THE DRAWINGS

FIG. 1 is a schematic diagram of a communication system architecture provided by the embodiments of the present disclosure.
FIG. 2 is a schematic diagram of a neuron structure.
FIG. 3 is a schematic diagram of a neural network.
FIG. 4 is a schematic diagram of a convolutional neural network.
FIG. 5 is a schematic diagram of an LSTM unit.
FIG. 6 is a schematic structural diagram of a CSI autoencoder.
FIG. 7 is a schematic interaction diagram of a channel state information (CSI) feedback method provided according to the present disclosure.
FIG. 8 is a schematic structural diagram of a CSI autoencoder provided by the present disclosure.
FIG. 9 is a schematic interaction diagram of an update method for an adaptation layer model provided by the present disclosure.
FIG. 10 is a schematic interaction diagram of another channel state information (CSI) feedback method provided according to the present disclosure.
FIG. 11 is a schematic structural diagram of another CSI autoencoder provided by the present disclosure.
FIG. 12 is a schematic block diagram of a terminal device provided according to the embodiments of the present disclosure.
FIG. 13 is a schematic block diagram of a network device provided according to the embodiments of the present disclosure.
FIG. 14 is a schematic block diagram of another terminal device provided according to the embodiments of the present disclosure.
FIG. 15 is a schematic block diagram of another network device provided according to the embodiments of the present disclosure.
FIG. 16 is a schematic block diagram of a communication device provided according to the embodiments of the present disclosure.
FIG. 17 is a schematic block diagram of a chip provided according to the embodiments of the present disclosure.
FIG. 18 is a schematic block diagram of a communication system provided according to the embodiments of the present disclosure.

### DETAILED DESCRIPTION

Technical solutions in the embodiments of the present disclosure will be described below with reference to the accompanying drawings of the embodiments of the present disclosure. Obviously, the described embodiments are merely some but not all of the embodiments of the present disclosure. All other embodiments obtained based on the embodiments of the present disclosure by those ordinary skilled in the art without paying creative efforts shall be included in the protection scope of the present disclosure.

The technical solutions of the embodiments of the present disclosure may be applied to various communication systems, such as: a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an Advanced long term evolution (LTE-A) system, a New Radio (NR) system, an evolution system of an NR system, an LTE-based access to unlicensed spectrum (LTE-U) system, an NR-based access to unlicensed spectrum (NR-U) system, a Non-Terrestrial communication Network (Non-Terrestrial Networks, NTN) system, a Universal Mobile Telecommunication System (UMTS), a Wireless Local Area Network (WLAN), a Wireless Fidelity (WiFi), a fifth-generation communication (5th-Generation, 5G) system, or other communication systems, etc.

Generally speaking, a number of connections supported by a traditional communication system is limited and is easy to implement, however, with the development of the communication technology, the mobile communication system will not only support the traditional communication, but also support, for example, Device to Device (D2D) communication, Machine to Machine (M2M) communication, Machine Type Communication (MTC), Vehicle to Vehicle (V2V) communication, or Vehicle to everything (V2X) communication, etc, and the embodiments of the present disclosure may also be applied to these communication systems.

Optionally, the communication system in the embodiments of the present disclosure may be applied to a carrier aggregation (CA) scenario, may also be applied to a dual connectivity (DC) scenario, and may also be applied to a standalone (SA) network deployment scenario.

Optionally, the communication system in the embodiments of the present disclosure may be applied to an unlicensed spectrum, where the unlicensed spectrum may also be considered as a shared spectrum; or the communication system in the embodiments of the present disclosure may also be applied to a licensed spectrum, where the licensed spectrum may also be considered as an unshared spectrum.

The embodiments of the present disclosure describe various embodiments in conjunction with a network device and a terminal device, where the terminal device may also be referred to as a user equipment (UE), an access terminal, a user unit, a user station, a mobile station, a mobile platform, a remote station, a remote terminal, a mobile device, a user terminal, a terminal, a wireless communication device, a user agent or a user apparatus, etc.

The terminal device may be a station (STATION, STA) in the WLAN, may be a cellular phone, a cordless phone, a Session Initiation Protocol (SIP) phone, a Wireless Local Loop (WLL) station, or a personal digital assistant (PDA) device, a handheld device with a wireless communication function, a computing device or other processing devices connected to a wireless modem, a vehicle-mounted device, a wearable device, a terminal device in a next generation communication system such as in an NR network, or a terminal device in a Public Land Mobile Network (PLMN) network evolved in the future, etc.

In the embodiments of the present disclosure, the terminal device may be deployed on land, which includes indoor or outdoor, in handheld, worn or vehicle-mounted; may also be deployed on water (e.g., on a ship, etc.); may also be deployed in the air (e.g., on an airplane, a balloon, a satellite, etc.).

In the embodiments of the present disclosure, the terminal device may be a mobile phone, a pad, a computer with a wireless transceiving function, a Virtual Reality (VR) terminal device, an Augmented Reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, a wireless terminal device in smart home, etc.

As an example but not a limitation, in the embodiments of the present disclosure, the terminal device may also be a wearable device. The wearable device, which is also referred to as a wearable smart device, is a generic term for a device that can be worn, into which the daily wear is intelligently designed and developed by applying wearable technologies, such as glasses, gloves, watches, clothing, and shoes, etc. The wearable device is a portable device that is worn directly on the body, or integrated into the user's clothing or accessories. The wearable device is not just a hardware device, but also achieves powerful functions through software supporting, data interaction, and cloud interaction. A generalized wearable smart device includes for example, a smartwatch or smart glasses, etc., with full functions, large size, and entire or partial functions without relying on a smartphone, as well as, for example, a smart bracelet and smart jewelry for physical sign monitoring, which only focuses on a certain type of application function and needs to be used in conjunction with other devices such as a smartphone.

In the embodiments of the disclosure, the network device may be a device used for communicating with a mobile device. The network device may be an Access Point (AP) in the WLAN, a base station (Base Transceiver Station, BTS) in the GSM or CDMA, may also be a base station (NodeB, NB) in the WCDMA, or may also be an evolutionary base station (Evolutionary Node B, eNB or eNodeB) in the LTE, or a relay station or an access point, or a vehicle-mounted device, a wearable device, and a network device (gNB) in an NR network, or a network device in the PLMN network evolved in the future or a network device in the NTN network, etc.

As an example but not a limitation, in the embodiments of the present disclosure, the network device may have a mobile characteristic, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station provided on land, water, and other places.

In the embodiments of the present disclosure, the network device may provide a service for a cell, and the terminal device communicates with the network device through a transmission resource (such as a frequency domain resource, or a frequency spectrum resource) used by the cell. The cell may be a cell corresponding to the network device (such as the base station), the cell may belong to a macro base station or may also belong to a base station corresponding to a small cell, and the small cell here may include: a metro cell, a micro cell, a pico cell, a femto cell, etc, these small cells have characteristics of small coverage range and low transmission power, which are applicable for providing a data transmission service with high speed.

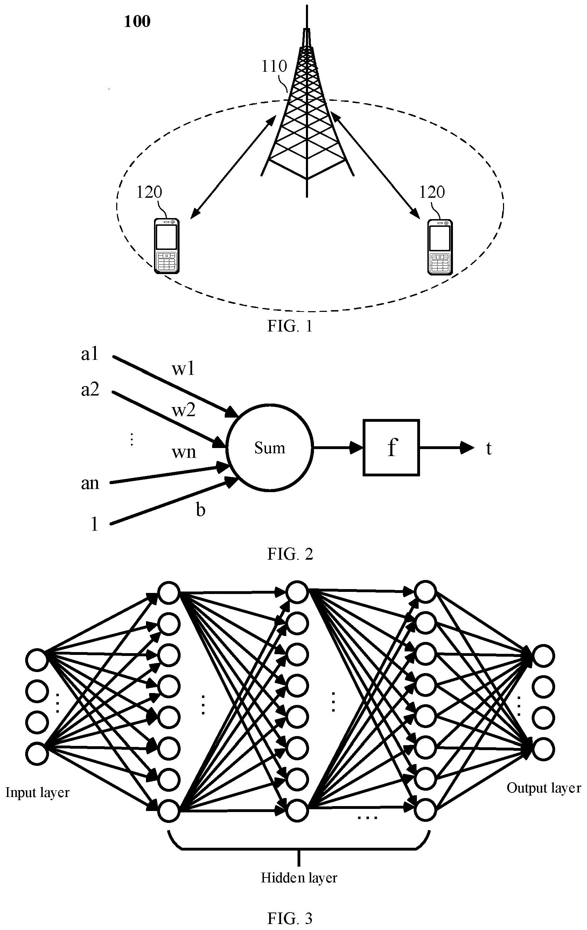

Exemplarily, a communication system 100 applied by the embodiments of the present disclosure is shown in FIG. 1. The communication system 100 may include a network device 110, and the network device 110 may be a device that communicates with a terminal device 120 (also referred to as a communication terminal or a terminal). The network device 110 may provide communication coverage for a specific geographical area and may communicate with a terminal device located within the coverage area.

FIG. 1 exemplarily shows one network device and two terminal devices, and optionally, the communication system 100 may include a plurality of network devices and may include another number of terminal devices within a coverage range of each network device, the embodiments of the present disclosure are not limited thereto.

Optionally, the communication system 100 may further include other network entities such as a network controller and a mobility management entity, which are not limited to the embodiments of the present disclosure.

It should be understood that, in the embodiments of the present disclosure, a device with a communication function in the network/system may be referred to as a communication device. Taking the communication system 100 shown in FIG. 1 as an example, the communication device may include the network device 110 and the terminal device 120 with the communication function, and the network device 110 and the terminal device 120 may be the specific devices described above, which will not be repeated herein; the communication device may also include other devices in the communication system 100, such as a network controller, a mobility management entity, and other network entities, which are not limited in the embodiments of the present disclosure.

It should be understood that the terms herein "system" and "network" are often used interchangeably herein. The term herein "and/or" is only an association relationship to describe associated objects, meaning that there may be three kinds of relationships, for example, A and/or B may mean three cases where: A exists alone, both A and B exist, and B exists alone. In addition, a character "/" herein generally means that related objects before and after "/" are in an "or" relationship.

It should be understood that the "indication" and variants thereof mentioned in the embodiments of the present disclosure may be a direct indication, may also be an indirect indication, or may also represent having an association relationship. For example, A indicates B, which may mean that A directly indicates B, for example, B may be acquired by A; may also mean that A indirectly indicates B, for example, A indicates C, and B may be acquired by C; or may also mean that there is an association relationship between A and B.

In the description of the embodiments of the present disclosure, the term "correspondence" and variants thereof may mean that there is a direct correspondence or indirect correspondence between the two, it may also mean that there is an associated relationship between the two, or it may also mean a relationship of indicating and being indicated or a relationship of configuring and being configured, etc.

In the embodiments of the present disclosure, "predefined" and variants thereof may be implemented by pre-saving corresponding codes, tables or other manners that may be used to indicate related information, in the device (for example, including the terminal device and the network device), and the present disclosure does not limit its specific implementation. For example, the predefined may refer to what is defined in a protocol.

In the embodiments of the present disclosure, the "protocol" may refer to a standard protocol in the field of communications, which may include, for example, an LTE protocol, an NR protocol, and related protocols applied in the future communication system, and the present disclosure is not limited thereto.

To facilitate a better understanding of the embodiments of the present disclosure, a neural network and deep learning related to the present disclosure are explained.

The neural network is an operation model consisting of multiple interconnected neuron nodes, where a connection between nodes represents a weighting value from an input signal to an output signal, which is referred to as a weight; each node performs a weighting summation (SUM) on different input signals and outputs via a specific activation function (f). FIG. 2 is a schematic diagram of a neuron structure, where a1, a2, ..., an represent input signals; w1, w2, ..., wn represent weights, f represents an excitation function, and t represents an output.

A simple neural network is shown in FIG. 3, and includes an input layer, hidden layers, and an output layer. Different outputs may be generated via different connection methods, weights, and activation functions of multiple neurons, thereby fitting a mapping relationship from the input to the output. Herein, each higher level node is connected to all its lower level nodes. This neural network is a fully connected neural network, which may also be referred to as a deep neural network (Deep Neural Network, DNN).

Deep learning uses the deep neural network with multiple hidden layers, which greatly improves an ability of the network to learn features and can fit a complex non-linear mapping from the input to the output, and thus, it is widely used in speech and image processing fields. In addition to the deep neural network, when facing different tasks, the deep learning further includes a convolutional neural network (Convolutional Neural Network, CNN), a recurrent neural network (Recurrent Neural Network, RNN) and other commonly used basic structures.

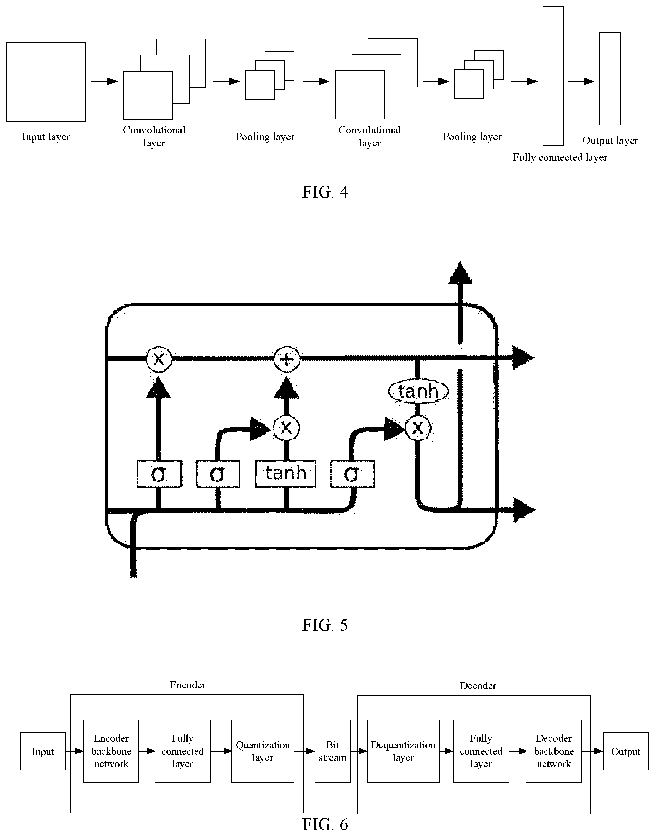

A basic structure of a convolutional neural network includes: an input layer, multiple convolutional layers, multiple pooling layers, a fully connected layer and an output layer, as shown in FIG. 4. Each neuron of a convolutional kernel in the convolutional layer is locally connected to its input, and the pooling layer is introduced to extract a local maximum or average feature of a certain layer, which effectively reduces parameters of the network and mines the local feature, so that the convolutional neural network can converge quickly and obtain the excellent performance.

RNN is a neural network that models sequence data, which has achieved remarkable results in the field of natural language processing, such as applications of the machine translation and the speech recognition. Specifically, the network memorizes information from the past moments and uses the information in the computation of the current output, that is, the nodes between the hidden layers are no longer unconnected but connected, and the input of the hidden layer includes not only the output of the input layer but also the output of a hidden layer at the previous moment. The commonly used RNN include structures such as long short-term memory network (Long Short-Term Memory, LSTM) and gated recurrent unit (Gated Recurrent Unit, GRU). FIG. 5 shows a basic LSTM unit structure, which may include a tanh activation function. Unlike RNN, which only considers the most recent state, the cell state of LSTM determines which states should be retained and which states should be forgotten, thereby solving the defects of the traditional RNN in the long-term memory.

To facilitate a better understanding of the embodiments of the present disclosure, a codebook-based channel state information (Channel State Information, CSI) feedback solution related to the present disclosure is explained.

In the NR system, codebook-based feature vector feedback is usually used, so that the base station acquires downlink CSI. Specifically, the base station transmits a downlink CSI-RS (Channel State Information-Reference Signal) to a user, the user estimates the CSI of the downlink channel by using the CSI-RS, and performs eigenvalue decomposition on the estimated downlink channel, to obtain a feature vector corresponding to the downlink channel. Furthermore, the NR system provides two codebook design solutions: Type 1 and Type 2. The Type 1 codebook is used for CSI feedback with conventional precision, mainly for CSI feedback in single user multiple input multiple output (Single User Multiple Input Multiple Output, SU-MIMO) scenarios, and the Type 2 codebook is mainly used to improve the transmission performance of multiple user multiple input multiple output (Multiple User Multiple Input Multiple Output, MU-MIMO).

For both the Type 1 codebook and the Type 2 codebook, a two-level codebook feedback of W=W1W2 is adopted, where W1 is used to describe a broadband and a long-term characteristic of the channel, and W2 is used to describe a sub-band and a short-term characteristic of the channel. Generally, the Type 2 codebook utilizes a higher number of feedback bits, thereby acquiring the CSI feedback performance of higher precision.

To facilitate a better understanding of the embodiments of the present disclosure, an artificial intelligence (AI)-based CSI feedback solution related to the present disclosure is explained.

Given the huge success of the AI technology, especially the deep learning, in the computer vision, the natural language processing, etc., the communication field has begun to try to utilize the deep learning to solve technical problems that are difficult to solve with traditional communication methods, such as deep learning. The neural network architecture commonly used in the deep learning is non-linear and data-driven, and may perform feature extraction on actual channel matrix data and restore the channel matrix information compressed and fed back at the terminal side as much as possible at the base station side, which ensures that the channel information is restored, and at the same time, provides a possibility for the terminal side to reduce the overhead of the CSI feedback. The deep learning-based CSI feedback regards the channel information as an image to be compressed, utilizes a deep learning autoencoder to compress and feedback the channel information, and reconstructs the compressed channel image at a transmitting end, which may retain the channel information to a greater extent.

A structure of a typical channel information feedback system (or referred to as an AI-based CSI autoencoder) is shown in FIG. 6. The entire feedback system is divided into an encoder part and a decoder part, which are deployed at a transmitting end and a receiving end respectively. After obtaining the channel information via the channel estimation, the transmitting end compresses and encodes the channel information matrix via the neural network of the encoder, and feeds back the compressed bit stream to the receiving end via the air interface feedback link. The receiving end recovers the channel information according to the feedback bit stream via the decoder, to obtain complete feedback channel information. The backbone networks of the encoder and the decoder shown in FIG. 6 may adopt a DNN composed of multiple fully connected layers, or a CNN composed of multiple convolutional layers, or an RNN with a structure such as LSTM, GRU, or various neural network architectures such as residual and self-attention mechanisms, to improve the performance of the encoder and the decoder. While the encoding and decoding framework remains unchanged, the backbone network model structures of the encoder and the decoder may be flexibly designed.

The technical problems existing in the above two CSI feedback solutions are described below.

For the codebook-based CSI feedback solution, since the codebook is pre-set and the correlation between different antenna ports and sub-bands is not effectively utilized, the feedback overhead is large and the feedback performance is poor.

For the AI-based CSI feedback solution, the correlation of the CSI feature vector in the time domain and frequency domain may be extracted, so that better feedback performance may be achieved at lower feedback overhead. However, the encoder and the decoder used in this feedback solution both adopt a neural network architecture and need to be trained on a large-scale dataset. Therefore, during the deployment process, the number of antenna ports and the number of sub-bands actually configured need to be consistent with the dataset used in the training of the model. In a case where the number of antenna ports and the number of sub-bands actually configured are inconsistent with the dataset used in the training of the model, the model cannot be used for the CSI feedback, thereby reducing the flexibility of the AI-based CSI feedback solution. For example, in a case where the training set is constructed by using a dataset based on a configuration of 32 transmission antenna ports and 12 sub-bands, the size of each sample in the dataset is 32*12*2=768 (here, 2 represents the separation of the real part and the imaginary part). The CSI encoder and decoder models obtained by training on this dataset have inputs and outputs as vectors or matrices with the length of 768, and are not efficiently adapted for feature vector inputs of other configurations of the number of transmission antenna ports and the number of sub-bands.

For example, in an actual deployment where a configuration of 16 transmission antenna ports and 12 sub-bands is adopted, then the input vector is the length of 384, which contains spatial and frequency domain features that are inconsistent with the training set, so the model obtained on the above-mentioned training set is not applicable under this configuration. However, in an actual deployment, different CSI encoder and decoder models are provided for each configuration of antenna ports and sub-bands, then types of models that need to be stored are too much, thereby resulting in the overhead for storing models, or too much overhead for model downloads when the model is downloaded from the air interface, which is also not an effective solution. Therefore, how to solve the design of the CSI autoencoder with inputs of variable dimensions is an urgent problem to be solved.

Therefore, how to solve the problem of the flexible adaptation of the AI-based CSI autoencoder for different configurations of the number of antenna ports and the number of sub-bands during the actual deployment process, is of great significance to the research on the AI-based CSI feedback.

If a corresponding model is trained for each configuration of antenna ports and sub-bands in the actual deployment, the terminal device needs to maintain too many types of models, thereby resulting in a large storage overhead, or a large air interface overhead if models need to be downloaded from the air interface.

To facilitate the understanding of the technical solutions in the embodiments of the present disclosure, the technical solutions of the present disclosure will be described in detail below through specific embodiments. The above related technologies, as optional solutions, may be arbitrarily combined with the technical solutions of the embodiments of the present disclosure, and those combined solutions all fall within the protection scope of the embodiments of the present disclosure. The embodiments of the present disclosure include at least a part of the following contents.

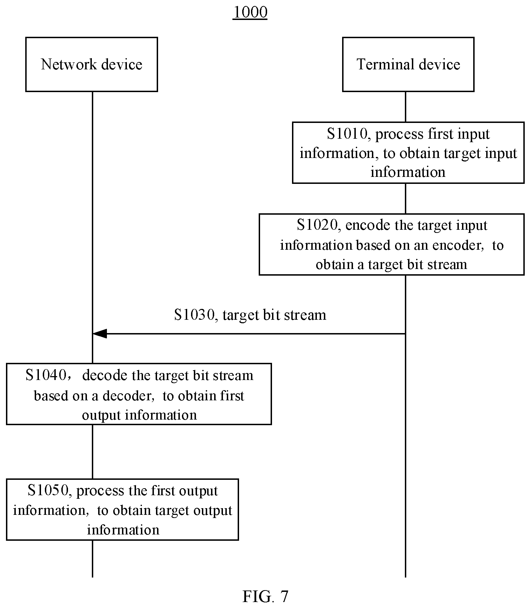

FIG. 7 is a schematic interaction diagram of a channel state information (CSI) feedback method 1000 according to the embodiments of the present disclosure. As shown in FIG. 7, the method 1000 includes at least a part of the following contents.

In S1010, a terminal device processes first input information, to obtain target input information.

In S1020, the terminal device encodes the target input information based on an encoder, to obtain a target bit stream.

In S1030, the terminal device transmits the target bit stream to a network device.

In S1040, the network device decodes the target bit stream based on a decoder, to obtain first output information.

In S1050, the network device processes the first output information, to obtain target output information.

In some embodiments, the first input information is CSI data obtained based on a target configuration, and the CSI data may be full channel information obtained by performing channel estimation on a reference signal, that is, unquantized channel information. Alternatively, the CSI data may also be feature vector information obtained based on full channel information. The present disclosure does not limit the specific form of the CSI data.

In some embodiments, a dimension of the target input information is the same as a dimension of CSI data obtained based on a reference configuration.

In some embodiments, a dimension of the first output information is the same as the dimension of the CSI data obtained based on the reference configuration.

In some embodiments, a dimension of the target output information is the same as a dimension of CSI data obtained based on a target configuration.

In some embodiments, the target configuration may be a current configuration of the terminal device, that is, a configuration indicated by the network device.

In some embodiments, dimensions of the CSI data obtained under different configurations are different, and different dimensions of the CSI data correspond to different feedback overheads, that is, different configurations may correspond to different feedback overheads. For example, in a case where the number of antenna ports or the number of sub-bands decreases, the feedback overhead also decreases accordingly. In other words, for the input CSI data with different dimensions, lengths of the generated target bit streams are different.

The configuration in the embodiments of the present disclosure may include at least one of: the number of antenna ports, the sub-band configuration, or may also include other configurations used when obtaining CSI data, which is not limited in the present disclosure. The configuration in the embodiments of the present disclosure is also referred to as a physical resource configuration, or a CSI configuration.

In some embodiments, the encoder may include a backbone network for extracting a time domain feature, a frequency domain feature, a spatial domain feature, etc., within the CSI data, such as extracting the correlation of the CSI data in the time domain and the frequency domain, which is conducive to reducing the feedback overhead and improving the feedback performance.

It should be understood that the present disclosure does not limit the implementation of the backbone network of the encoder. For example, a neural network model such as DNN, CNN, RNN may be used for the implementation, or a network structure such as residual, branch, attention network may be used for the implementation, which is not limited in the present disclosure.

In some embodiments, the decoder may include a backbone network for recovering the received target bit stream into CSI data.

It should be understood that the present disclosure does not limit the implementation of the backbone network of the decoder. For example, a neural network model such as DNN, CNN, RNN may be used for the implementation, or a network structure such as residual, branch, attention network may be used for the implementation, which is not limited in the present disclosure.

In the embodiments of the present disclosure, the backbone network of the encoder is adapted to the dimension of the CSI data under the reference configuration.

In some embodiments, the encoder includes an adaptation layer, an input dimension of the adaptation layer is an output dimension of a first network, an output dimension of the adaptation layer is determined according to a length of a bit stream that needs to be fed back under the target configuration, and the first network is a higher level network of the adaptation layer in the encoder. Optionally, the first network may be a connected layer, or may also be other network structures, which is not limited in the present disclosure.

In some embodiments, the decoder includes an adaptation layer, an input dimension of the adaptation layer is determined according to the length of the bit stream that needs to be fed back under the target configuration, an output dimension of the adaptation layer is an input dimension of a second network, and the second network is a lower level network of the adaptation layer in the decoder. Optionally, the second network may be a connected layer, or may also be other network structures, which is not limited in the present disclosure.

In the embodiments of the present disclosure, the encoder is deployed at the terminal device side, and the decoder is deployed at the network device side.

For the convenience of distinction and explanation, the adaptation layer in the encoder is recorded as an encoder adaptation layer, and the adaptation layer in the decoder is recorded as a decoder adaptation layer. It should be noted that the adaptation layer in the embodiments of the present disclosure may also be referred to as an adaptation network.

It should be understood that the present disclosure does not limit the specific implementation of the adaptation layer, which is implemented, for example, by one fully connected layer, or multiple fully connected layers.

In some embodiments, in a network model of the encoder, the higher level network of the adaptation layer is the first network, the input dimension of the adaptation layer may be the output dimension of the first network, denoted as M, and the output dimension of the adaptation layer may be adjusted according to the length of the bit stream that needs to be fed back under the target configuration (for example, the number of floating-point numbers corresponding to the length of the target bit stream), denoted as N. For example, if the length of the bit stream that needs to be fed back under the target configuration is 64 bits, and 2-bit quantization is used, the output dimension of the adaptation layer is N=128.

In some embodiments, in a network model of the decoder, the input dimension of the adaptation layer is determined according to the length of the bit stream that needs to be fed back under the target configuration, denoted as N, and the output dimension of the adaptation layer is the input dimension of the second network, denoted as P. The second network is the lower level network of the adaptation layer in the decoder.

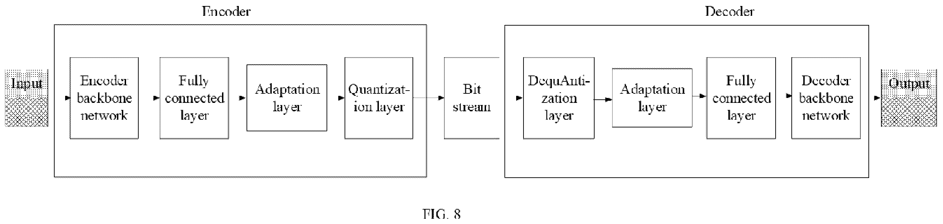

FIG. 8 is a network structure diagram of a CSI autoencoder provided by the embodiments of the present disclosure, but the present disclosure is not limited thereto. For example, the network structure before the adaptation layer in the encoder may be a fully connected layer, or other network structures, and the network structure after the adaptation layer in the decoder may be a fully connected layer, or other network structures, or the fully connected layer may also be considered as belonging to the backbone network of the model.

As shown in FIG. 8, the encoder may include a backbone network, a fully connected layer, an adaptation layer, and a quantization layer. The decoder may include a dequantization layer, an adaptation layer, a fully connected layer, and a backbone network.

Based on the network structure shown in FIG. 8, the input dimension of the encoder adaptation layer may be the output dimension M of the fully connected layer of the encoder. The output dimension of the encoder adaptation layer may be adjusted according to the length of the bit stream that needs to be fed back under the target configuration. The input dimension of the decoder adaptation layer may be the output dimension N of the dequantization layer. The output dimension of the decoder adaptation layer is the input dimension P of the fully connected layer of the decoder.

In some embodiments, the reference configuration may be a highest configuration of a plurality of configurations, such as a configuration of the largest number of antenna ports and/or the largest number of sub-bands, or referred to as a high-dimensional physical resource configuration. That is, generally speaking, the dimension of the CSI data corresponding to the reference configuration is higher than the dimension of the CSI data corresponding to the target configuration.

In the embodiments of the present disclosure, before inputting the first input information into the encoder, the terminal device first processes the first input information, to obtain the target input information with the same dimension as that of the CSI data under the reference configuration, and further, inputs the target input information into the backbone network of the encoder. In this way, for CSI inputs with different dimensions, only the adaptation layers of the encoder and the decoder need to be adjusted, without adjusting the backbone networks of the encoder and the decoder, which is beneficial to ensuring the stability of the backbone networks of the encoder and the decoder.

In some embodiments, the dimension of the CSI data under the reference configuration is greater than the dimension of the CSI data corresponding to the target configuration. In this case, the terminal device may perform a padding process on the first input information to obtain the target input information. Optionally, the padding process here may be 0-padding, which is used to help avoid the padded data affecting the feature distribution of the original CSI data. Alternatively, other padding methods may also be used, such as noise padding, cyclic shift padding, which is not limited in the present disclosure.

In some embodiments, the CSI data may be represented by a real part and an imaginary part. In a case of calculating the dimension of the CSI data, the real part and the imaginary part may be used as one dimension respectively, or the real part and the imaginary part may be combined as one dimension, which is not limited in the present disclosure.

In some other embodiments, the CSI data may be represented by an amplitude and a phase. In a case of calculating the dimension of the CSI data, the amplitude and the phase may be used as one dimension respectively, or the amplitude and the phase may be combined as one dimension, which is not limited in the present disclosure.

In the following, calculating the dimension of the CSI data by using the real part and the imaginary part (or the amplitude and the phase) of the CSI data as one dimension respectively, is taken as example for the description, which is not limited in the present disclosure.

For example, the reference configuration is 32 ports and 12 sub-bands, that is, the dimension of the CSI data under the reference configuration is 32*12*2 (here, 2 represents separating the real part and the imaginary part as one dimension respectively, or separating the amplitude and the phase as one dimension respectively) = 768, and the target configuration is 16 ports and 12 sub-bands, that is, the dimension of the CSI data under the target configuration is 16*12*2 (here, 2 represents separating the real part and the imaginary part as one dimension respectively, or separating the amplitude and the phase as one dimension respectively) = 384. In this case, the padding operation is required in the port dimension.

For another example, the reference configuration is 32 ports and 12 sub-bands, that is, the dimension of the CSI data under the reference configuration is 32*12*2 (here, 2 represents separating the real part and the imaginary part as one dimension respectively, or separating the amplitude and the phase as one dimension respectively) = 768, and the target configuration is 16 ports and 6 sub-bands, that is, the dimension of the CSI data under the target configuration is 16*6*2 (here, 2 represents separating the real part and the imaginary part as one dimension respectively, or separating the amplitude and the phase as one dimension respectively) = 192. In this case, the padding operation is required in both the port dimension and the sub-band dimension.

In some embodiments, after receiving the target bit stream, the network device may decode the target bit stream based on the decoder, to obtain first output information, and then process the first output information, to obtain target output information, where the dimension of the target output information is the same as the dimension of the CSI data obtained based on the target configuration.

For example, the network device decodes the target bit stream based on the decoder to obtain first CSI data. Since the first CSI data includes the CSI data obtained by the terminal device performing the padding process, the network device accordingly cuts the CSI data at the padding position, to obtain target CSI data. That is, the positions of the CSI data for which the terminal device performs the padding process and the network device performs the cutting process, are matched with each other.

The model training methods of the encoder and the decoder are described below in conjunction with specific embodiments.

For the convenience of distinction and explanation, the network model except the adaptation layer in the encoder is recorded as a basic encoder model, and the network model except the adaptation layer in the decoder is recorded as a basic decoder model.

In some embodiments, the basic encoder model is used to encode CSI data under the reference configuration, the basic decoder model is used to decode CSI data under the reference configuration, a combination of the basic encoder model and the encoder adaptation layer model may be used to encode CSI data under other configurations other than the reference configuration, and a combination of the basic decoder model and the decoder adaptation layer model may be used to decode the target bit stream under other configurations other than the reference configuration.

In some embodiments, the basic encoder model and the basic decoder model may be trained based on a CSI dataset with a large dimension. In this way, the backbone networks of the encoder and the decoder can extract the correlation of CSI data in a larger spatial domain and frequency domain range, for compression and recovery. In a case of configuring CSI data with a smaller dimension, the adaptation layer of the encoder may be used to further extract low-dimensional latent space vector information from high-dimensional latent space vector information, with the backbone network of the encoder unchanged. Correspondingly, the adaptation layer of the decoder performs the corresponding inverse operation.

Therefore, in the embodiments of the present disclosure, based on the backbone networks of the encoder and the decoder, the adaptation layer parameters may be adjusted according to different configurations, and input information with different dimensions may be padded at the encoder side to obtain input information with a target dimension, and the cutting process is performed at the output end of the decoder, to obtain the output information with a target dimension, which enables the adaptation layer to flexibly adapt to the CSI feedback with different dimensions (or under different configurations), without changing the backbone network models of the encoder and the decoder.

In some embodiments, the models of the encoder and the decoder are trained by the network device.

In some embodiments, the models of the encoder and the decoder may be trained by offline training or online training.

In some embodiments, the method 1000 further includes:
reporting, by the terminal device, a first CSI dataset and at least one second CSI dataset to the network device. Herein, the first CSI dataset corresponds to the reference configuration, and the at least one second CSI dataset corresponds to at least one first configuration, and the at least one first configuration does not include the reference configuration. That is, the first CSI dataset is obtained based on the reference configuration, and the at least one second CSI dataset is obtained based on other configurations.

For example, the first CSI dataset corresponds to a configuration 0, and the at least one second CSI dataset includes a CSI dataset 2-1, a CSI dataset 2-2, ..., a CSI dataset 2-X, which correspond to a configuration 1-1 to a configuration 1-X, respectively. That is, the CSI dataset 2-i is obtained based on the configuration 1-i, where i=1, 2, ..., X, and X is a positive integer.

In some embodiments, the basic encoder model, the basic decoder model, the encoder adaptation layer model and the decoder adaptation layer model are trained by a serial training method. For example, first, the basic encoder model and the basic decoder model are obtained by training based on the CSI dataset under the reference configuration, and further, the adaptation layer models corresponding to other configurations are obtained by training based on the CSI datasets under the other configurations.

For example, the basic encoder model and the basic decoder model are obtained by training based on the first CSI dataset.

For another example, adaptation layer parameters corresponding to the configuration 1-1 to the configuration 1-X respectively are obtained by training based on the CSI dataset 2-1, the CSI dataset 2-2, ..., the CSI dataset 2-X. For example, in a case of the basic encoder model and the basic decoder model are fixed, the adaptation layer model is trained based on the CSI dataset 2-1 corresponding to the configuration 1-1, to obtain the adaptation layer model corresponding to the configuration 1-1.

A specific process of a model training method provided by the embodiments of the present disclosure is explained with reference to a specific example.

In this example, DataSet-Config1 represents a CSI dataset corresponding to Config1 (i.e., the reference configuration), DataSet-Config2 represents a CSI dataset corresponding to Config2, and DataSet-ConfigX represents a CSI dataset corresponding to ConfigX, where Config1 is the reference configuration, and Config2 to ConfigX are non-reference configurations.

In a step S1, the network models other than the adaptation layer in the encoder and the decoder are trained based on DataSet-Config1, until the models converge, to obtain the basic encoder model and the basic decoder model, or the basic model parameters of the encoder and the decoder.

In a step S2 to a step SX, based on the basic encoder model and the basic decoder model obtained in the step S1, the adaptation layers in the encoder and the decoder are trained based on DataSet-Config2 to DataSet-ConfigX respectively, that is, re-training is performed in a case where other model parameters other than the adaptation layer in the encoder and the decoder are fixed, to obtain the adaptation layer parameters corresponding to Config2 to ConfigX respectively.

For example, in the step S2, based on the basic encoder model and the basic decoder model obtained in the step S1, the adaptation layers in the encoder and the decoder are trained based on DataSet-Config2, that is, the training is performed in a case where other model parameters other than the adaptation layer in the encoder and the decoder are fixed, to obtain the adaptation layer parameters corresponding to Config2.

For another example, in the step SX, based on the basic encoder model and the basic decoder model obtained in the step S1, the adaptation layers in the encoder and the decoder are trained based on DataSet-ConfigX, that is, the training is performed in a case where other model parameters other than the adaptation layer in the encoder and the decoder are fixed, to obtain the adaptation layer parameters corresponding to ConfigX.

In some embodiments, the basic encoder model, the basic decoder model, the encoder adaptation layer model and the decoder adaptation layer model are trained by using a parallel training method. That is, the models are alternately trained based on the CSI dataset under the reference configuration and the CSI datasets under other configurations, to obtain the basic encoder model, the basic decoder model, the encoder adaptation layer model, and the decoder adaptation layer model.

Herein, the CSI dataset under the reference configuration is used to train the basic encoder model and the basic decoder model. The CSI datasets under other configurations are used to train the adaptation layer models corresponding to other configurations.

A specific process of a model training method provided by the embodiments of the present disclosure is explained with reference to a specific example.

In this example, DataSet-Config1 represents a CSI dataset corresponding to Config1 (i.e., the reference configuration), DataSet-Config2 represents a CSI dataset corresponding to Config2, and DataSet-ConfigX represents a CSI dataset corresponding to ConfigX, where Config1 is the reference configuration, and Config2 to ConfigX are non-reference configurations.

In a step S1, the network models other than the adaptation layer in the encoder and the decoder are trained for T1 rounds based on DataSet-Config1.

In a step S2 to a step SX, based on the basic encoder model and the basic decoder model obtained in the step S1, the adaptation layers in the encoder and the decoder are trained for rounds T2 to TX based on DataSet-Config2 to DataSet-ConfigX, respectively.

For example, in the step S2, based on the basic encoder model and the basic decoder model obtained in the step S1, the adaptation layers in the encoder and the decoder are trained for rounds T2 based on DataSet-Config2.

For another example, in the step SX, based on the basic encoder model and the basic decoder model obtained in the step SX, the adaptation layers in the encoder and the decoder are trained for rounds TX based on DataSet-ConfigX.

The steps S1 and S2 to SX are performed alternately, until the models converge. Herein, step S1 may obtain the basic encoder model and the basic decoder model, and the step S2 to the step SX may obtain the adaptation layer parameters corresponding to Config2 to ConfigX respectively.

Optionally, the above training rounds' parameters T1, T2, ..., TX may be determined by the network device, or predefined.

It should be understood that in the above model training method, before training the models based on DataSet-Config2 to DataSet-ConfigX, the CSI data in DataSet-Config2 to DataSet-ConfigX first needs to be padded, so that the dimension of the padded CSI data is the same as the dimension of the CSI data in DataSet-Config1.

Optionally, in some other embodiments, the encoder model and the decoder model are trained by the terminal device. For example, after obtaining the first CSI dataset and the at least one second CSI dataset, the terminal device may perform the model training based on the first CSI dataset and the at least one second CSI dataset, to obtain the encoder model and the decoder model. The specific training method is similar to the training method at the network device side, which will not be repeated here.

In some embodiments, the serial training method may be applicable to the offline training scenario and the online training scenario.

For example, in the online training scenario, when the target configuration of the terminal device is updated to a configuration ConfigY, and if there is no corresponding CSI dataset at the network device side, the serial training method may be used, to first acquire the CSI dataset DataSet-ConfigY corresponding to ConfigY, and then re-train the model based on DataSet-ConfigY, and then obtain the adaptation layer parameter corresponding to ConfigY.

In some embodiments, the parallel training method may be applicable to the offline training scenario.

In some scenarios, considering that the terminal device may support more ports and a larger bandwidth, and thus, for all CSI data with the small dimension, using the adaptation layer to adapt to the backbone network of the model trained by the CSI dataset with the large dimension will result in the performance loss.

In view of this, in the embodiments of the present disclosure, the terminal device may perform the adaption to the backbone network model in units of configuration groups, which can more flexibly support the adaptation layer-based CSI feedback method of the embodiments of the present disclosure, while ensuring a better performance of the CSI feedback.

In some embodiments, a plurality of configurations may be divided into a plurality of configuration groups, and each configuration group includes one reference configuration and at least one non-reference configuration. Herein, CSI data corresponding to a non-reference configuration in one configuration group only needs to adapt to a dimension of CSI data corresponding to the reference configuration in the configuration group to which the non-reference configuration belongs, and does not need to adapt to a dimension of CSI data corresponding to the highest configuration. That is to say, a same configuration group may correspond to the same basic encoder model and basic decoder model, and different configuration groups may correspond to different basic encoder models and basic decoder models.

In some embodiments, the plurality of configuration groups may be predefined, or configured by the network device.

In some embodiments, a dimension of CSI data corresponding to a reference configuration in a configuration group is greater than dimensions of CSI data corresponding to other configurations in the configuration group. That is, a reference configuration in a configuration group is the configuration with the highest dimension in the configuration group.

In some embodiments, configurations in different configuration groups do not overlap.

In some embodiments, the number of configurations included in different configuration groups may be the same or different.

For example, the plurality of configuration groups includes G configuration groups, where G is a positive integer greater than 1. For example, G=2, that is, the plurality of configuration groups includes a low-dimensional configuration group and a high-dimensional configuration group. For the high-dimensional configuration group, the following configurations are included: Config0-1, Config0-2..., Config0-X0, i.e., a total of X0 configurations, where Config0-1 is a reference configuration in the high-dimensional configuration group, that is, a configuration of the maximum number of ports and the maximum bandwidth that can be supported in the high-dimensional configuration group (for example, 64 ports, 12 sub-bands), the CSI dataset corresponding to Config0-1 is used to determine the basic encoder model and the basic decoder model, recorded as a Config0-1 model, and the CSI datasets corresponding to Config0-2 to Config0-X0 are used to determine the corresponding adaptation layer models, where the adaptation layer models corresponding to Config0-2 to Config0-X0 are all adapted to the Config0-1 model.

For the low-dimensional configuration group, the following configurations are included: Config1-1, Config1-2..., Config1-X1, i.e., a total of X1 configurations, where Config1-1 is the reference configuration of the low-dimensional configuration group, that is, a configuration of the maximum port and the maximum bandwidth supported by the low-dimensional configuration group (for example, 8 ports, 6 sub-bands), the CSI dataset corresponding to Config1-1 is used to determine the basic encoder model and the basic decoder model, recorded as a Config1-1 model, and the CSI datasets corresponding to Config1-2 to Config1-X1 are used to determine the corresponding adaptation layer models, and the adaptation layer models corresponding to Config1-2 to Config1-X1 are all adapted to the Config1-1 model.

Then, in a case where the target configuration is Config0-2, the dimension of the CSI data corresponding to Config0-2 is first padded as the dimension of the CSI data corresponding to Config0-1, and further, the CSI data is compressed and restored based on the Config0-1 model and the adaptation layer model corresponding to Config0-2. In a case where the target configuration is Config1-2, the dimension of the CSI data corresponding to Config1-2 is first padded as the dimension of the CSI data corresponding to Config1-1, and further, the CSI data is compressed and restored based on the Config1-1 model and the adaptation layer model corresponding to Config1-2.

In some embodiments, all configurations in the low-dimensional configuration group do not overlap with all configurations in the high-dimensional configuration group.

In some embodiments, X0 and X1 may be the same or different.

In some embodiments, the target configuration belongs to a first configuration group, and the network device may indicate the first configuration group and the target configuration to the terminal device.

In some implementations, the network device may indicate the target configuration group and the target configuration by using a joint indication method.

In some embodiments, the network device transmits first indication information to the terminal device, where the first indication information is used to indicate the first configuration group and the target configuration.

In some embodiments, the first indication information is represented by using *log*2(*G*) *+ log*2 (*max*{*X*₀*,X*₁,..*., X*_{*G-*1}} bits, where *G* represents a total number of the configuration groups, *X*ᵢ represents a number of configurations included in a configuration group i, *i* = 0,1,..., *G* - 1, and *max* represents taking a maximum value.

Herein, *log*2(*G*) bits are used to indicate the first configuration group, and *log*2 (*max*{*X*₀*,X*₁,..., *X*_{*G*-1}}) bits are used to indicate the target configuration in the first configuration group.

It should be understood that the embodiments of the present disclosure do not limit the transmitting method of the first indication information. For example, the first indication information may be transmitted via any downlink signaling, as an example, transmitted via a media access control control element (Media Access Control Control Element, MAC CE) and downlink control information (Downlink Control Information, DCI).

In some implementations, the network device may indicate the first configuration group and the target configuration by using a hierarchical indication method.

In some embodiments, the network device transmits second indication information and third indication information to the terminal device, the second indication information is used to indicate the first configuration group, and the third indication information is used to indicate the target configuration.

Optionally, the second indication information and the third indication information may be transmitted via the same signaling, or may also be transmitted via different signalings. For example, the second indication information and the third indication information may be carried in different indication fields in the same signaling.

Optionally, the second indication information may be transmitted via MAC CE or DCI.

Optionally, the third indication information may be transmitted via MAC CE or DCI.

For example, the second indication information is transmitted via MAC CE, the third indication information is transmitted via DCI.

For another example, the second indication information is transmitted via DCI, the third indication information is transmitted via MAC CE.

For another example, the second indication information and the third indication information are both transmitted via DCI or MAC CE.

In some embodiments, the second indication information is represented by using *log*2(*G*) bits, and the third indication information is represented by using *log*2 (*max*{*X₀,X*₁*,..., X*_{*G*-1}}) bits, where *G* represents a total number of the configuration groups, *X*ᵢ represents a number of configurations included in a configuration group i, *i* = 0,1,..., *G* -1, and *max* represents taking a maximum value.

In some embodiments, in a case where the adaptation layer model is updated at the granularity of configuration groups, when the configuration group corresponding to the target configuration changes, and if the basic encoder model corresponding to the updated configuration group is not stored on the terminal device, the terminal device needs to acquire the basic encoder model corresponding to the updated configuration group from the network device. Alternatively, the basic encoder models corresponding to the plurality of configuration groups respectively may be acquired in advance from the network device.

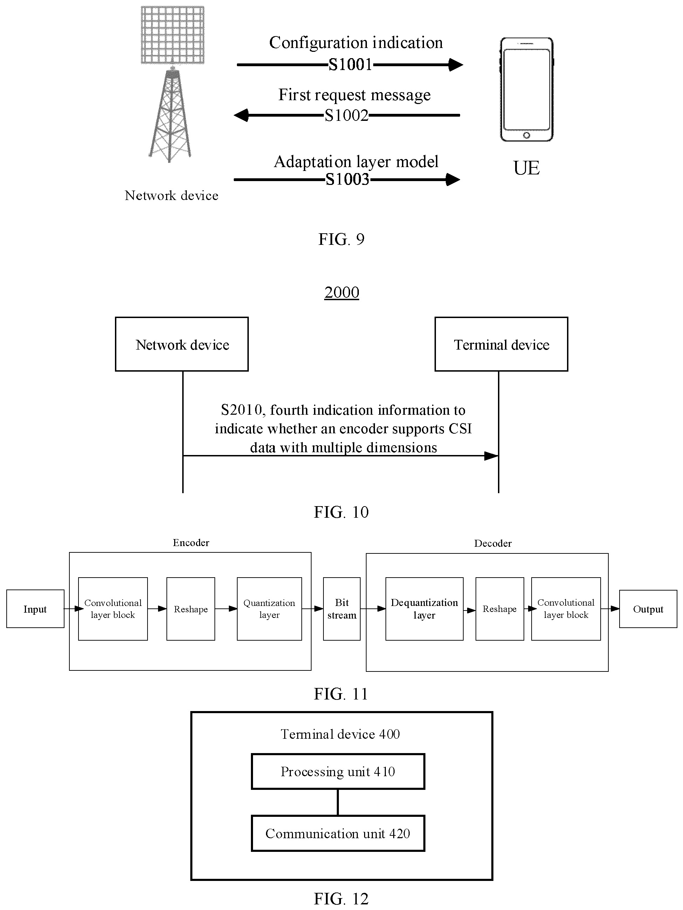

In conjunction with FIG. 9, an update method for an adaptation layer model provided according to the embodiments of the present disclosure is described.

In S1001, a network device transmits a configuration indication to a terminal device.

In some embodiments, in a case where the adaptation layer is updated at the granularity of configuration groups, the configuration indication may be the first indication information, or may be the second indication information and the third indication information. That is, the configuration indication may be used to determine the target configuration group and the target configuration.

In some embodiments, in a case where the adaptation layer is updated at the granularity of configurations, the configuration indication may be used to determine the target configuration.

In S1002, the terminal device transmits a first request message to the network device, to request an adaptation layer model corresponding to the target configuration.

In S1003, the network device transmits the adaptation layer model corresponding to the target configuration to the terminal device.

Optionally, in a case where the adaptation layer model corresponding to the target configuration is not stored on the terminal device, the terminal device transmits the first request message; in a case where the adaptation layer model corresponding to the target configuration is stored on the terminal device, the terminal device may not transmit the first request message. For example, if the terminal device has received a configuration indication of the target configuration in a cell and has stored the corresponding adaptation layer model locally, in this case, the terminal device may not perform the S1002 and S1003, and only need to select the adaptation layer model corresponding to the target configuration locally.

Optionally, if the configuration group corresponding to the target configuration of the terminal device changes, and the basic encoder model corresponding to the configuration group is not stored on the terminal device, the first request message is further used to request the basic encoder model corresponding to the updated configuration group.

Therefore, in the embodiments of the present disclosure, the design solution of the adaptation layer-based CSI autoencoder adapts CSI data with variable dimensions by designing the adaptation layer. In a case where the configuration is updated, there is no need to perform a large number of model updates, and only the model of the adaptation layer needs to be updated, which enables the AI-based CSI feedback solution to adapt to CSI feedback under multiple physical resource configurations at a relatively small model update cost, thereby improving the flexibility and practicality of the AI-based CSI feedback method in cellular systems.

In addition, a model update method based on a configuration group is provided. For CSI data with variable dimensions, only the dimension of the CSI data of the reference configuration in the configuration group needs to be adapted, and there is no need to adapt the CSI data with the maximum dimension, which can more flexibly support the adaptation layer-based CSI feedback method of the embodiments of the present disclosure, and at the same time, can ensure a better performance of the CSI feedback.

FIG. 10 is a schematic interaction diagram of a channel state information (CSI) feedback method 2000 according to the embodiments of the present disclosure. As shown in FIG. 10, the method 2000 includes at least a part of the following contents.

In S2010, a network device may transmit fourth indication information to a terminal device, where the fourth indication information is used to indicate whether an encoder configured on the terminal device supports CSI data with multiple dimensions, or, whether an encoder configured on the terminal device has an ability to adapt to inputs with variable dimensions.

It should be understood that the embodiments of the present disclosure do not limit the transmitting method of the fourth indication information. For example, the first indication information may be transmitted via any downlink signaling, as an example, transmitted via radio resource control (Radio Resource Control, RRC) signaling, MAC CE or DCI.

In some embodiments, when the terminal device is downloading an encoder model, the network device may indicate to the terminal device whether the encoder supports CSI data with multiple dimensions. Specifically, the main bottleneck for whether the AI model can process CSI data of inputs with variable dimensions lies in the encoder design on the terminal device side. Since the decoder is deployed at the network device side, the specific implementation of the decoder and the model adjustment for adapting to the CSI data of inputs with variable dimensions are transparent to the terminal device side. Therefore, whether the encoder at the terminal device side has the ability to adapt to the CSI data of inputs with variable dimensions will determine whether the adaptation layer download and other operations need to be performed for the model in a case where the input dimension changes. However, when the terminal device enters a cell, the encoder at the terminal device side is also often downloaded from the network device side, but is not determined by the local implementation of the terminal device, and the CSI autoencoder architecture deployed on each cell may also be inconsistent. Therefore, in the embodiments of the present disclosure, when the terminal device performs an initial encoder model download, the network device may indicate to the terminal device whether the model has the ability to adapt to inputs with variable dimensions.

In some embodiments, the fourth indication information may be carried in the model parameter of the encoder, that is, whether the model has the ability to adapt to inputs with variable dimensions may be carried in the model parameter. For example, as a feature ability parameter of the AI model, it is distributed to the terminal device together with the AI model, stored locally by the terminal device, and acquired when the terminal device uses the model.

In some embodiments, the terminal device may encode first input information based on a first encoder model to obtain a target bit stream, where the first encoder model may support CSI data with multiple dimensions, and the first input information is CSI data.

In some embodiments, the first encoder model is implemented by using a fully convolutional neural network, or may also be implemented by other network structures that are insensitive to the input dimension, which is not limited in the present disclosure.

In some embodiments, the first encoder model does not include a fully connected layer.

FIG. 11 is a network structure diagram of a CSI autoencoder provided by the embodiments of the present disclosure, but the present disclosure is not limited thereto. For example, the convolutional layer blocks in the encoder and the decoder may be a combination of multiple convolutional layers and multiple pooling layers, or may also include a neural network architecture that does not contain a trainable parameter, such as the residual neural network architecture, the branch neural network architecture, etc.

As shown in FIG. 11, the encoder may include a convolutional layer block, a reshaping layer (Reshape), and a quantization layer. The decoder may include a dequantization layer, a reshape layer, and a convolutional layer block. The reshaping layer does not include a trainable parameter, that is, the reshaping layer does not require the model training, and the reshaping layer is used to rearrange the input into the dimension of the output. For example, it converts the input of 32*12 dimension to the output of 768*1.

In some embodiments, if the encoder model has the ability to adapt to inputs with variable dimensions, in a case where the network device changes the physical resource configuration of the terminal device, such as ports, sub-bands, etc., the network device does not need to re-distribute the adaptation layer model to the terminal device, that is, the terminal device does not need to re-download the adaptation layer model on the air interface, which is beneficial to reducing the air interface overhead.

In some embodiments, if the encoder model does not have the ability to adapt to inputs with variable dimensions, for example, the adaptation layer-based model structure in the method 1000 is adopted. In this case, in a case where the network device changes the physical resource configuration of the terminal device, such as ports, sub-bands, etc., if the adaptation layer model corresponding to the updated configuration is not stored on the terminal device, the adaptation layer model needs to be downloaded on the air interface. For example, the adaptation layer model is updated by the method in the embodiments shown in FIG. 9.

Therefore, in the embodiments of the present disclosure, the terminal device may encode the CSI data based on the encoder model that is adapted to inputs with variable dimensions, so that the AI-based CSI autoencoder model does not need to be updated more frequently as the physical resource configuration of the terminal device changes, thereby reducing the model update overhead during the actual deployment of the AI model, and so that the CSI autoencoder implemented by a single model framework may adapt to CSI data with multiple dimensions as the input. This improves the flexibility and generalization performance of AI-based feedback.

Method embodiments of the present disclosure are described in detail above in conjunction with FIG. 7 to FIG. 11, and apparatus embodiments of the present disclosure will be described in detail below in conjunction with FIG. 12 to FIG. 18. It can be understood that the apparatus embodiments correspond to the method embodiments, and the similar description thereof may refer to the method embodiments.

FIG. 12 illustrates a schematic block diagram of a terminal device 400 according to the embodiments of the present disclosure. As shown in FIG. 12, the terminal device 400 includes:
a processing unit 410, configured to process first input information to obtain target input information, where the first input information is CSI data obtained based on a target configuration, and a dimension of the target input information is the same as a dimension of CSI data obtained based on a reference configuration;
the processing unit 410 further configured to encode the target input information based on an encoder to obtain a target bit stream; and
a communication unit 420, configured to transmit the target bit stream to a network device;
where the encoder includes an adaptation layer, an input dimension of the adaptation layer is an output dimension of a first network, an output dimension of the adaptation layer is determined according to a length of a bit stream that needs to be fed back under the target configuration, and the first network is a higher level network of the adaptation layer in the encoder.

In some embodiments, the target configuration includes at least one of the following configurations:
a number of antenna ports, or a number of sub-bands.

In some embodiments, a dimension of the first input information is smaller than the dimension of the CSI data obtained based on the reference configuration, and the processing unit 410 is further configured to:
perform a padding process on the first input information to obtain the target input information.

In some embodiments, the communication unit 420 is further configured to:
transmit a first CSI dataset and at least one second CSI dataset to the network device, where the first CSI dataset is obtained based on the reference configuration, the at least one second CSI dataset corresponds to at least one first configuration, the at least one first configuration does not include the reference configuration, and each second CSI dataset is obtained based on a corresponding first configuration.

In some embodiments, the first CSI dataset is used to train a model other than the adaptation layer in the encoder and a model other than an adaptation layer in the decoder;
the at least one second CSI dataset is used to train a model of the adaptation layer in the encoder and a model of the adaptation layer in the decoder;
where the decoder is deployed on the network device.

In some embodiments, the target configuration belongs to a first configuration group, the first configuration group is one of a plurality of configuration groups, each configuration group includes one reference configuration and at least one other configuration.

In some embodiments, the plurality of configuration groups are predefined, or configured by the network device.

In some embodiments, the communication unit 420 is further configured to:
receive first indication information transmitted by the network device, the first indication information is used to indicate the target configuration in the first configuration group.

In some embodiments, the first indication information indicates a configuration group to which the target configuration belongs and the target configuration by using a joint indication method.

In some embodiments, the first indication information is represented by using *log2*(*G*) *+ log2* (*max*{*X*₀*,X*₁,..*., X*_{*G-*1}} bits, where *G* represents a total number of configuration groups, *Xᵢ* represents a number of configurations included in a configuration group i, *i* = 0,1,..., *G* -1, and *max* represents taking a maximum value.

In some embodiments, the first indication information is transmitted via at least one of the following signalings:
a media access control control element (MAC CE), or downlink control information (DCI).

In some embodiments, the communication unit 420 is further configured to:
receive second indication information and third indication information transmitted by the network device, where the second indication information is used to indicate a configuration group to which the target configuration belongs, and the third indication information is used to indicate index information of the target configuration in the first configuration group.

In some embodiments, the second indication information is represented by using *log*2(*G*) bits, and the third indication information is represented by using *log*2 (*max*{*X*₀*,X*₁*,..., X*_{*G*-1}}) bits, where *G* represents a total number of configuration groups, *X*ᵢ represents a number of configurations included in a configuration group i, *i* = 0,1,..., *G* -1, and *max* represents taking a maximum value.

In some embodiments, the second indication information is transmitted via at least one of the following signalings: an MAC CE, or DCI.

In some embodiments, the third indication information is transmitted via at least one of the following signalings: an MAC CE, or DCI.

In some embodiments, the communication unit 420 is further configured to:
transmit a first request message to the network device, to request a model of an adaptation layer corresponding to the target configuration; and
receive the model of the adaptation layer corresponding to the target configuration transmitted by the network device.

In some embodiments, the communication unit 420 is further configured to:
in a case where the model of the adaptation layer corresponding to the target configuration is not stored on the terminal device, transmit the first request message to the network device.

Optionally, in some embodiments, the communication unit mentioned above may be a communication interface or a transceiver, or an input-output interface of a communication chip or a system on chip. The processing unit mentioned above may be one or more processors.

It should be understood that the terminal device 400 according to the embodiments of the present disclosure may correspond to the terminal device in the method embodiments of the present disclosure, and the above-mentioned and other operations and/or functions of each unit in the terminal device 400 are respectively for implementing the corresponding procedures of the terminal device in the method 1000 shown in FIG. 7 to FIG. 9, which will not be repeated here for brevity.

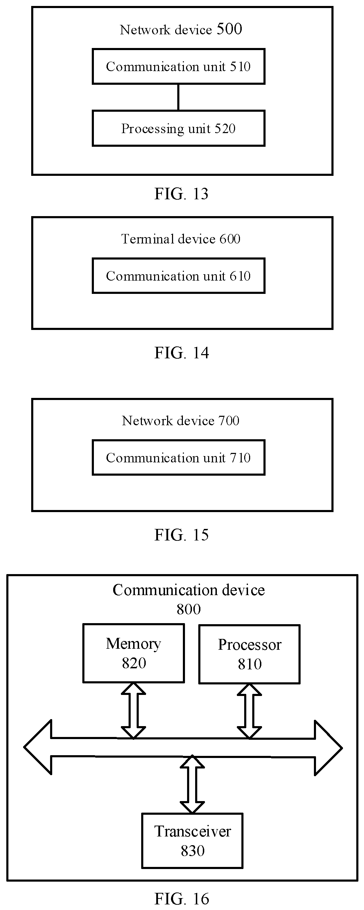

FIG. 13 illustrates a schematic block diagram of a network device according to the embodiments of the present disclosure, the network device 500 of FIG. 13 includes:
a communication unit 510, configured to receive a target bit stream transmitted by a terminal device, where the target bit stream is a bit stream that needs to be fed back under a target configuration;
a processing unit 520, configured to decode the target bit stream based on a decoder to obtain first output information, where a dimension of the first output information is the same as a dimension of CSI data obtained based on a reference configuration; and
process the first output information to obtain target output information, where a dimension of the target output information is the same as a dimension of CSI data obtained based on the target configuration;
where the decoder includes an adaptation layer, an input dimension of the adaptation layer is determined according to a length of the bit stream that needs to be fed back under the target configuration, an output dimension of the adaptation layer is an input dimension of a second network, and the second network is a lower level network of the adaptation layer in the decoder.

In some embodiments, the target configuration includes at least one of the following configurations:
a number of antenna ports, or a number of sub-bands.

In some embodiments, the dimension of the first output information is smaller than the dimension of the CSI data obtained based on the reference configuration, and the processing unit 520 is further configured to:
perform a cutting process on the first output information to obtain the target output information.

In some embodiments, the communication unit 510 is further configured to:
receive a first CSI dataset and at least one second CSI dataset transmitted by the terminal device, where the first CSI dataset is obtained based on the reference configuration, the at least one second CSI dataset corresponds to at least one first configuration, the at least one first configuration does not include the reference configuration, and each second CSI dataset is obtained based on a corresponding first configuration.

In some embodiments, the first CSI dataset is used to train a model other than the adaptation layer in the decoder and a model other than an adaptation layer in an encoder;
the at least one second CSI dataset is used to train a model of the adaptation layer in the decoder and a model of the adaptation layer in the encoder;
where the encoder is deployed on the terminal device.

In some embodiments, the processing unit 520 is further configured to: train a model other than the adaptation layer in the decoder and a model other than an adaptation layer in an encoder based on the first CSI dataset, to obtain basic model parameters of the encoder and the decoder.

In some embodiments, the processing unit 520 is further configured to: in the case of the basic model parameters of the encoder and the decoder, train a model of the adaptation layer in the encoder and a model of the adaptation layer in the decoder based on each second CSI dataset in the at least one second CSI dataset, to obtain adaptation layer parameters corresponding to the at least one first configuration respectively.

In some embodiments, the processing unit 520 is further configured to:
perform a step S1, where the step S1 includes training a model other than the adaptation layer in the decoder and a model other than an adaptation layer in an encoder based on the first CSI dataset, where the first CSI dataset is obtained based on the reference configuration;
perform a step S2, where the step S2 includes training a model of the adaptation layer in the encoder and a model of the adaptation layer in the decoder according to each CSI dataset in the at least one second CSI dataset in sequence, based on model parameters obtained in the step S1;
perform the step S1 and the step S2 in a loop, until the model of the encoder and the model of the decoder converge.

In some embodiments, the target configuration belongs to a first configuration group, the first configuration group is one of a plurality of configuration groups, each configuration group includes one reference configuration and at least one other configuration.

In some embodiments, the plurality of configuration groups are predefined, or configured by the network device.

In some embodiments, the communication unit 510 is further configured to:
transmit first indication information to the terminal device, where the first indication information is used to indicate the target configuration in the first configuration group.

In some embodiments, the first indication information indicates a configuration group to which the target configuration belongs and the target configuration by using a joint indication method.

In some embodiments, the first indication information is represented by using *log2*(*G*) *+ log2* (*max*{*X*₀*,X*₁,..*., X*_{*G-*1}} bits, where *G* represents a total number of configuration groups, *X*ᵢ represents a number of configurations included in a configuration group i, *i* = 0,1,..., *G* -1, and *max* represents taking a maximum value.

In some embodiments, the first indication information is transmitted via at least one of the following signalings:
a media access control control element (MAC CE), or downlink control information (DCI).

In some embodiments, the communication unit 510 is further configured to:
transmit second indication information and third indication information to the terminal device, where the second indication information is used to indicate a configuration group to which the target configuration belongs, and the third indication information is used to indicate index information of the target configuration in the first configuration group.

In some embodiments, the second indication information is represented by using *log*2(*G*) bits, and the third indication information is represented by using *log*2 (*max*{*X*₀*,X*₁*,..., X*_{*G*-1}}) bits, where *G* represents a total number of configuration groups, *X*ᵢ represents a number of configurations included in a configuration group i, *i* = 0,1,..., *G* -1, and *max* represents taking a maximum value.

In some embodiments, the second indication information is transmitted via at least one of the following signalings: an MAC CE, or DCI.

In some embodiments, the third indication information is transmitted via at least one of the following signalings: an MAC CE, or DCI.

In some embodiments, the communication unit 510 is further configured to:
receive a first request message transmitted by the terminal device, where the first request message is used to request a model of an adaptation layer corresponding to the target configuration; and
transmit the model of the adaptation layer corresponding to the target configuration to the terminal device.

Optionally, in some embodiments, the communication unit mentioned above may be a communication interface or a transceiver, or an input-output interface of a communication chip or a system on chip. The processing unit mentioned above may be one or more processors.

It should be understood that the network device 500 according to the embodiments of the present disclosure may correspond to the network device in the method embodiments of the present disclosure, and the above-mentioned and other operations and/or functions of each unit in the network device 500 are respectively for implementing the corresponding procedures of the network device in the method 1000 shown in FIG. 7 to FIG. 9, which will not be repeated here for brevity.

FIG. 14 illustrates a schematic block diagram of a terminal device 600 according to the embodiments of the present disclosure, As shown in FIG. 14, the terminal device 600 includes:
a communication unit 610, configured to receive fourth indication information transmitted by a network device, where the fourth indication information is used to indicate whether an encoder deployed on the terminal device supports CSI data with multiple dimensions;

In some embodiments, the fourth indication information is transmitted by at least one of the following signalings:
a radio resource control (RRC) signaling, a media access control control element (MAC CE), or downlink control information (DCI).

In some embodiments, the fourth indication information is carried in a model parameter of the encoder.

In some embodiments, the encoder includes an adaptation layer, an input dimension of the adaptation layer is an output dimension of a first network, an output dimension of the adaptation layer is determined according to a length of a bit stream that needs to be fed back under a target configuration, and the first network is a higher level network of the adaptation layer in the encoder.

In some embodiments, the communication unit 610 is further configured to:
in a case where the network device changes the target configuration, transmit a second request message to the network device, where the second request message is used to request a model of an adaptation layer corresponding to changed target configuration.

In some embodiments, the encoder deployed on the terminal device supports CSI data with multiple dimensions, and the encoder is implemented by using a fully convolutional neural network.

Optionally, in some embodiments, the communication unit mentioned above may be a communication interface or a transceiver, or an input-output interface of a communication chip or a system on chip.

It should be understood that the terminal device 600 according to the embodiments of the present disclosure may correspond to the terminal device in the method embodiments of the present disclosure, and the above-mentioned and other operations and/or functions of each unit in the terminal device 600 are respectively for implementing the corresponding procedures of the terminal device in the method 2000 shown in FIG. 10 to FIG. 11, which will not be repeated here for brevity.

FIG. 15 illustrates a schematic block diagram of a network device according to the embodiments of the present disclosure. The network device 700 of FIG. 15 includes:
a communication unit 710, configured to transmit fourth indication information to a terminal device, where the fourth indication information is used to indicate whether an encoder deployed on the terminal device supports CSI data with multiple dimensions.

In some embodiments, the fourth indication information is transmitted by at least one of the following signaling:
a radio resource control (RRC) signaling, a media access control control element (MAC CE), or downlink control information (DCI).

In some embodiments, the fourth indication information is carried in a model parameter of the encoder.

In some embodiments, the encoder includes an adaptation layer, an input dimension of the adaptation layer is an output dimension of a first network, an output dimension of the adaptation layer is determined according to a length of a bit stream that needs to be fed back under a target configuration, and the first network is a higher level network of the adaptation layer in the encoder.

In some embodiments, the communication unit 710 is further configured to:
in a case where the network device changes the target configuration, receive a second request message transmitted by the network device, where the second request message is used to request a model of an adaptation layer corresponding to changed target configuration.

In some embodiments, the encoder deployed on the terminal device supports CSI data with multiple dimensions, and the encoder is implemented by using a fully convolutional neural network.

Optionally, in some embodiments, the communication unit mentioned above may be a communication interface or a transceiver, or an input-output interface of a communication chip or a system on chip.

It should be understood that the network device 700 according to the embodiments of the present disclosure may correspond to the network device in the method embodiments of the present disclosure, and the above-mentioned and other operations and/or functions of each unit in the network device 700 are respectively for implementing the corresponding procedures of the network device in the method 2000 shown in FIG. 10 to FIG. 11, which will not be repeated here for brevity.

FIG. 16 is a schematic structural diagram of a communication device 800 provided by the embodiments of the present disclosure. The communication device 800 shown in FIG. 16 includes a processor 810, which may call a computer program from a memory and run the computer program, to implement the methods in the embodiments of the present disclosure.

Optionally, as shown in FIG. 16, the communication device 800 may further include a memory 820. Herein, the processor 810 may call a computer program from the memory 820 and run the computer program, to implement the methods in the embodiments of the present disclosure.

Herein, the memory 820 may be a separate device independent from the processor 810, or may also be integrated into the processor 810.

Optionally, as shown in FIG. 8, the communication device 800 may further include a transceiver 830, and the processor 810 may control the transceiver 830 to communicate with other devices, and specifically, to transmit information or data to other devices, or receive information or data transmitted by other devices.

Herein, the transceiver 830 may include a transmitter and a receiver. The transceiver 830 may further include an antenna(s), and the number of antenna(s) may be one or more.

Optionally, the communication device 800 may specifically be the network device in the embodiments of the present disclosure, and the communication device 800 may implement the corresponding procedures implemented by the network device in various methods of the embodiments of the present disclosure, which will not be repeated here for brevity.

Optionally, the communication device 800 may specifically be a mobile terminal/terminal device in the embodiments of the present disclosure, and the communication device 800 may implement the corresponding procedures implemented by the mobile terminal/terminal device in various methods of the embodiments of the present disclosure, which will not be repeated here for brevity.

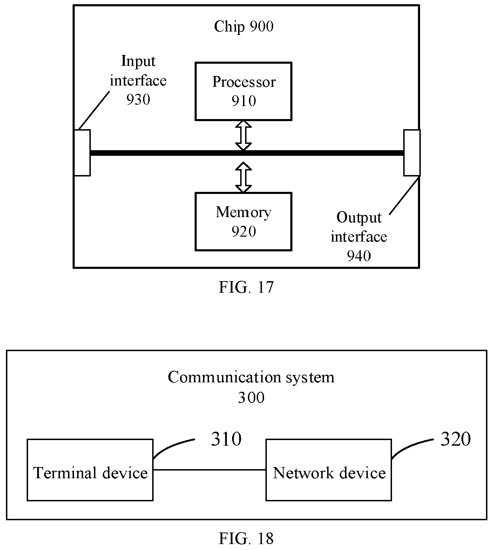

FIG. 17 is a schematic structural diagram of a chip of the embodiments of the present disclosure. The chip 900 shown in FIG. 17 includes a processor 910, and the processor 910 may call a computer program from a memory and run the computer program, to implement the methods in the embodiments of the present disclosure.

Optionally, as shown in FIG. 9, the chip 900 may further include a memory 920. Herein, the processor 910 may call a computer program from the memory 920 and run the computer program, to implement the methods in the embodiments of the present disclosure.

Herein, the memory 920 may be a separate device independent from the processor 910, or may be integrated into the processor 910.

Optionally, the chip 900 may further include an input interface 930. Herein, the processor 910 may control the input interface 930 to communicate with other devices or chips, and specifically, to acquire information or data transmitted by other devices or chips.

Optionally, the chip 900 may further include an output interface 940. Herein, the processor 910 may control the output interface 940 to communicate with other devices or chips, and specifically, to output information or data to other devices or chips.

Optionally, the chip may be applied to the network device in the embodiments of the present disclosure, and the chip may implement the corresponding procedures implemented by the network device in the various methods of the embodiments of the present disclosure, which will not be repeated here for brevity.

Optionally, the chip may be applied to the mobile terminal/terminal device in the embodiments of the present disclosure, and the chip may implement the corresponding procedures implemented by the mobile terminal/terminal device in the various methods of the embodiments of the present disclosure, which will not be repeated here for brevity.

It should be understood that the chip mentioned in the embodiments of the present disclosure may also be referred to as a system on chip, a system chip, a chip system or a system-on-chip chip, etc.

FIG. 18 is a schematic block diagram of a communication system 300 provided in the embodiments of the present disclosure. As shown in FIG. 18, the communication system 300 includes a terminal device 310 and a network device 320.

Herein, the terminal device 310 may be used to implement the corresponding functions implemented by the terminal device in the above-mentioned methods, and the network device 320 may be used to implement the corresponding functions implemented by the network device in the above-mentioned methods, which will not be repeated here for brevity.

It should be understood that the processor in the embodiments of the present disclosure may be an integrated circuit chip and have a processing capability of signals. In the implementation process, various steps of the above method embodiments may be completed by an integrated logic circuit of hardware in the processor or instructions in a software form. The above processor may be a general processor, a Digital Signal Processor (DSP), an Application Specific Integrated Circuit (ASIC), a Field Programmable Gate Array (FPGA) or other programmable logic devices, a discrete gate or transistor logic device, a discrete hardware component. Various methods, steps and logical block diagrams disclosed in the embodiments of the present disclosure may be implemented or performed. The general processor may be a microprocessor, or the processor may also be any conventional processor, etc. The steps of the method disclosed in combination with the embodiments of the present disclosure may be directly embodied as being performed and completed by a hardware decoding processor, or by using a combination of hardware and software modules in a decoding processor. The software module may be located in the mature storage medium in the art such as the random memory, the flash memory, the read-only memory, the programmable read-only memory or electrically erasable programmable memory, the register, etc. The storage medium is located in the memory, and the processor reads the information in the memory and completes the steps of the above methods in combination with its hardware.

It may be understood that, the memory in the embodiments of the present disclosure may be a volatile memory or a non-volatile memory, or may include both the volatile memory and the non-volatile memory. Herein, the non-volatile memory may be a Read-Only Memory (ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a Random Access Memory (RAM), which is used as an external cache. Through illustrative, rather than limiting, illustration, many forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM) and a direct rambus random access memory (Direct Rambus RAM, DR RAM). It should be noted that the memory of the system and the method described herein is intended to include, but not limited to, these and any other suitable types of memories.

It should be understood that the above memory is exemplary but not limiting illustration, e.g., the memory in embodiments of the present disclosure may also be a static Random Access Memory (static RAM, SRAM), a Dynamic Random Access Memory (dynamic RAM, DRAM), a synchronous DRAM (SDRAM), a double data rate SDRAM (DDR SDRAM), an enhanced SDRAM (ESDRAM), a synch link DRAM (SLDRAM), and a Direct Rambus RAM (DR RAM), etc. That is, the memory in the embodiments of the present disclosure is intended to include, but not limited to, these and any other suitable types of memories.

The embodiments of the present disclosure further provide a computer-readable storage medium for storing a computer program.

Optionally, the computer-readable storage medium may be applied to the network device in the embodiments of the present disclosure, and the computer program causes a computer to perform the corresponding procedure implemented by the network device in the various methods of the embodiments of the present disclosure, which will not be repeated here for the sake of brevity.

Optionally, the computer-readable storage medium may be applied to the mobile terminal/terminal device in the embodiments of the present disclosure, and the computer program causes a computer to perform the corresponding procedure implemented by the mobile terminal/terminal device in various methods of the embodiments of the present disclosure, which will not be repeated here for the sake of brevity.

The embodiments of the present disclosure further provide a computer program product including a computer program instruction.

Optionally, the computer program product may be applied to the network device in the embodiments of the present disclosure, and the computer program instruction causes a computer to perform the corresponding procedure implemented by the network device in the various methods of the embodiments of the present disclosure, which will not be repeated here for the sake of brevity.

Optionally, the computer program product may be applied to the mobile terminal/terminal device in the embodiments of the present disclosure, and the computer program instruction causes a computer to perform the corresponding procedure implemented by the mobile terminal/terminal device in various methods of the embodiments of the present disclosure, which will not be repeated here for the sake of brevity.

The embodiments of the present disclosure further provide a computer program.

Optionally, the computer program may be applied to the network device in the embodiments of the present disclosure, the computer program when being executed on a computer, causes the computer to perform the corresponding procedure implemented by the network device in various methods of the embodiments of the present disclosure, which will not be repeated here for the sake of brevity.

Optionally, the computer program may be applied to the mobile terminal/terminal device in the embodiments of the present disclosure, the computer program when being executed on a computer, causes the computer to perform the corresponding procedure implemented by the mobile terminal/terminal device in various methods of the embodiments of the present disclosure, which will not be repeated here for the sake of brevity.

Those ordinary skilled in the art may realize that units and algorithm steps of the examples described in combination with the embodiments disclosed herein can be implemented in electronic hardware or in a combination of computer software and electronic hardware. Whether these functions are performed by way of hardware or software depends on a specific application and a design constraint of the technical solution. A skilled person may use different methods for each specific application, to implement the described functions, but such implementation should not be considered beyond the scope of the present disclosure.

It may be clearly understood by those skilled in the art that, for convenience and brevity of the description, the specific working procedures of the system, the apparatus and the unit described above may refer to the corresponding procedures in the above method embodiments, which will not be repeated here.

In the several embodiments provided by the disclosure, it should be understood that, the disclosed systems, apparatus, and method may be implemented in other ways. For example, the apparatus embodiments described above are only schematic, for example, division of the units is only division of logical functions, and there may be other division methods in an actual implementation, for example, a plurality of units or components may be combined or integrated into another system, or some features may be ignored or not performed. On the other hand, the coupling or direct coupling or communicative connection between each other as shown or discussed may be indirect coupling or communicative connection of apparatus or units via some interfaces, which may be electrical, mechanical, or in other forms.

The units illustrated as separate components may be or may not be physically separated, and the components shown as units may be or may not be physical units, that is, they may be located in one place, or may be distributed onto a plurality of network units. A part or all of the units may be selected according to actual needs, to implement the purpose of the schemes of the embodiments.

In addition, the various functional units in the various embodiments of the present disclosure may be integrated into one processing unit, or the various units may exist physically separately, or two or more units may be integrated into one unit.

If the described functions are implemented in the form of a software functional unit and sold or used as an independent product, they may be stored in a computer-readable storage medium. Based on this understanding, the technical solution of the present disclosure essentially, or a part of the technical solution that contributes to the prior art, or a part of the technical solution, may be embodied in the form of a software product, and the computer software product is stored in a storage medium, and includes a plurality of instructions for enabling a computer device (which may be a personal computer, a server, or a network device, etc.) to perform all or some of steps of the methods described in the various embodiments of the present disclosure. And, the storage medium mentioned above includes a USB flash drive (U disk), a mobile hard disk, a read-only memory (Read-Only Memory, ROM), a Random Access Memory (RAM), a diskette, or an optical disk, and various mediums that may store program codes.

The above content is only specific implementations of the present disclosure, but the protection scope of the present disclosure is not limited thereto, and any skilled familiar with this technical field may easily think of changes or substitutions within the technical scope disclosed in the present disclosure, which should be all covered within the protection scope of the present disclosure. Therefore, the protection scope of the present disclosure should be determined by the protection scope of the claims.

## Claims

1. A channel state information (CSI) feedback method, wherein the method is applied to a terminal device, and the method comprises:
processing first input information to obtain target input information, wherein the first input information is CSI data obtained based on a target configuration, and a dimension of the target input information is the same as a dimension of CSI data obtained based on a reference configuration;
encoding the target input information based on an encoder to obtain a target bit stream; and
transmitting the target bit stream to a network device;
wherein the encoder comprises an adaptation layer, an input dimension of the adaptation layer is an output dimension of a first network, an output dimension of the adaptation layer is determined according to a length of a bit stream that needs to be fed back under the target configuration, and the first network is a higher level network of the adaptation layer in the encoder.

2. The method according to claim 1, wherein the target configuration comprises at least one of the following configurations:
a number of antenna ports, or a number of sub-bands.

3. The method according to claim 1 or 2, wherein a dimension of the first input information is smaller than the dimension of the CSI data obtained based on the reference configuration, processing the first input information to obtain the target input information comprises:
performing a padding process on the first input information to obtain the target input information.

4. The method according to any one of claims 1 to 3, wherein the method further comprises:
transmitting a first CSI dataset and at least one second CSI dataset to the network device, wherein the first CSI dataset is obtained based on the reference configuration, the at least one second CSI dataset corresponds to at least one first configuration, the at least one first configuration does not comprise the reference configuration, and each second CSI dataset is obtained based on a corresponding first configuration.

5. The method according to claim 4, wherein the first CSI dataset is used to train a model other than the adaptation layer in the encoder and a model other than an adaptation layer in the decoder;
the at least one second CSI dataset is used to train a model of the adaptation layer in the encoder and a model of the adaptation layer in the decoder;
wherein the decoder is deployed on the network device.

6. The method according to any one of claims 1 to 5, wherein the target configuration belongs to a first configuration group, the first configuration group is one of a plurality of configuration groups, and each configuration group comprises one reference configuration and at least one other configuration.

7. The method according to claim 6, wherein the plurality of configuration groups are predefined, or configured by the network device.

8. The method according to claim 6 or 7, wherein the method further comprises:
receiving first indication information transmitted by the network device, the first indication information is used to indicate the target configuration in the first configuration group.

9. The method according to claim 8, wherein the first indication information indicates a configuration group to which the target configuration belongs and the target configuration by using a joint indication method.

10. The method according to claim 9, wherein the first indication information is represented by using *log*2(*G*) *+ log*2 (*max*{*X*₀*,X*₁,..*., X*_{*G-*1}} bits, wherein *G* represents a total number of configuration groups, *X*ᵢ represents a number of configurations comprised in a configuration group i, *i* = 0,1,..., *G* -1, and *max* represents taking a maximum value.

11. The method according to any one of claims 8 to 10, wherein the first indication information is transmitted via at least one of the following signalings:
a media access control control element (MAC CE), or downlink control information (DCI).

12. The method according to claim 6 or 7, wherein the method further comprises:
receiving second indication information and third indication information transmitted by the network device, wherein the second indication information is used to indicate a configuration group to which the target configuration belongs, and the third indication information is used to indicate index information of the target configuration in the first configuration group.

13. The method according to claim 12, wherein the second indication information is represented by using *log*2(*G*) bits, and the third indication information is represented by using *log*2 (*max*{*X*₀*,X*₁*,..., X*_{*G-*1}}) bits, wherein *G* represents a total number of configuration groups, *X*ᵢ represents a number of configurations comprised in a configuration group i, *i* = 0,1,..., *G* - 1, and *max* represents taking a maximum value.

14. The method according to claim 12 or 13, wherein the second indication information is transmitted via at least one of the following signalings: an MAC CE, or DCI.

15. The method according to any one of claims 12 to 14, wherein the third indication information is transmitted via at least one of the following signalings: an MAC CE, or DCI.

16. The method according to any one of claims 1 to 15, wherein the method further comprises:
transmitting a first request message to the network device, wherein the first request message is used to request a model of an adaptation layer corresponding to the target configuration; and
receiving the model of the adaptation layer corresponding to the target configuration transmitted by the network device.

17. The method according to claim 16, wherein transmitting the first request message to the network device comprises:
in a case where the model of the adaptation layer corresponding to the target configuration is not stored on the terminal device, transmitting the first request message to the network device.

18. A channel state information (CSI) feedback method, wherein the method is applied to a network device, and the method comprises:
receiving a target bit stream transmitted by a terminal device, wherein the target bit stream is a bit stream that needs to be fed back under a target configuration;
decoding the target bit stream based on a decoder to obtain first output information, wherein a dimension of the first output information is the same as a dimension of CSI data obtained based on a reference configuration; and
processing the first output information to obtain target output information, wherein a dimension of the target output information is the same as a dimension of CSI data obtained based on the target configuration;
wherein the decoder comprises an adaptation layer, an input dimension of the adaptation layer is determined according to a length of the bit stream that needs to be fed back under the target configuration, an output dimension of the adaptation layer is an input dimension of a second network, and the second network is a lower level network of the adaptation layer in the decoder.

19. The method according to claim 18, wherein the target configuration comprises at least one of the following configurations:
a number of antenna ports, or a number of sub-bands.

20. The method according to claim 18 or 19, wherein the dimension of the first output information is smaller than the dimension of the CSI data obtained based on the reference configuration, processing the first output information to obtain the target output information comprises:
performing a cutting process on the first output information to obtain the target output information.

21. The method according to any one of claims 18 to 20, wherein the method further comprises:
receiving a first CSI dataset and at least one second CSI dataset transmitted by the terminal device, wherein the first CSI dataset is obtained based on the reference configuration, the at least one second CSI dataset corresponds to at least one first configuration, the at least one first configuration does not comprise the reference configuration, and each second CSI dataset is obtained based on a corresponding first configuration.

22. The method according to claim 21, wherein the first CSI dataset is used to train a model other than the adaptation layer in the decoder and a model other than an adaptation layer in an encoder;
the at least one second CSI dataset is used to train a model of the adaptation layer in the decoder and a model of the adaptation layer in the encoder;
wherein the encoder is deployed on the terminal device.

23. The method according to claim 21 or 22, wherein the method further comprises:
training a model other than the adaptation layer in the decoder and a model other than an adaptation layer in an encoder based on the first CSI dataset, to obtain basic model parameters of the encoder and the decoder.

24. The method according to claim 23, wherein the method further comprises:
in the case of the basic model parameters of the encoder and the decoder, training a model of the adaptation layer in the encoder and a model of the adaptation layer in the decoder based on each second CSI dataset in the at least one second CSI dataset, to obtain adaptation layer parameters corresponding to the at least one first configuration respectively.

25. The method according to claim 21 or 22, wherein the method further comprises:
performing a step S1, wherein the step S1 comprises training a model other than the adaptation layer in the decoder and a model other than an adaptation layer in an encoder based on the first CSI dataset, wherein the first CSI dataset is obtained based on the reference configuration;
performing a step S2, wherein the step S2 comprises training a model of the adaptation layer in the encoder and a model of the adaptation layer in the decoder according to each CSI dataset in the at least one second CSI dataset in sequence, based on model parameters obtained in the step S1;
performing the step S1 and the step S2 in a loop, until the model of the encoder and the model of the decoder converge.

26. The method according to any one of claims 18 to 25, wherein the target configuration belongs to a first configuration group, the first configuration group is one of a plurality of configuration groups, and each configuration group comprises one reference configuration and at least one other configuration.

27. The method according to claim 26, wherein the plurality of configuration groups are predefined, or configured by the network device.

28. The method according to claim 26 or 27, wherein the method further comprises:
transmitting first indication information to the terminal device, wherein the first indication information is used to indicate the target configuration in the first configuration group.

29. The method according to claim 28, wherein the first indication information indicates a configuration group to which the target configuration belongs and the target configuration by using a joint indication method.

30. The method according to claim 29, wherein the first indication information is represented by using *log*2(*G*) *+ log*2 (*max*{*X*₀*,X*₁,..*., X*_{*G-*1}}) bits, wherein *G* represents a total number of configuration groups, *Xᵢ* represents a number of configurations comprised in a configuration group i, *i* = 0,1,..., *G* - 1, and *max* represents taking a maximum value.

31. The method according to any one of claims 28 to 30, wherein the first indication information is transmitted via at least one of the following signalings:
a media access control control element (MAC CE), or downlink control information (DCI).

32. The method according to claim 26 or 27, wherein the method further comprises:
transmitting second indication information and third indication information to the terminal device, wherein the second indication information is used to indicate a configuration group to which the target configuration belongs, and the third indication information is used to indicate index information of the target configuration in the first configuration group.

33. The method according to claim 32, wherein the second indication information is represented by using *log*2(*G*) bits, and the third indication information is represented by using *log*2 (*max*{*X*₀*,X*₁*,..., X*_{*G*-1}}) bits, wherein *G* represents a total number of configuration groups, *X*ᵢ represents a number of configurations comprised in a configuration group i, *i* = 0,1,..., *G* - 1, and *max* represents taking a maximum value.

34. The method according to claim 32 or 33, wherein the second indication information is transmitted via at least one of the following signalings: an MAC CE, or DCI.

35. The method according to any one of claims 32 to 34, wherein the third indication information is transmitted via at least one of the following signalings: an MAC CE, or DCI.

36. The method according to any one of claims 18 to 35, wherein the method further comprises:
receiving a first request message transmitted by the terminal device, wherein the first request message is used to request a model of an adaptation layer corresponding to the target configuration; and
transmitting the model of the adaptation layer corresponding to the target configuration to the terminal device.

37. A channel state information (CSI) feedback method, wherein the method is applied to a terminal device, and the method comprises:
receiving fourth indication information transmitted by a network device, wherein the fourth indication information is used to indicate whether an encoder deployed on the terminal device supports CSI data with multiple dimensions.

38. The method according to claim 37, wherein the fourth indication information is transmitted by at least one of the following signalings:
a radio resource control (RRC) signaling, a media access control control element (MAC CE), or downlink control information (DCI).

39. The method according to claim 37, wherein the fourth indication information is carried in a model parameter of the encoder.

40. The method according to any one of claims 37 to 39, wherein the encoder comprises an adaptation layer, an input dimension of the adaptation layer is an output dimension of a first network, an output dimension of the adaptation layer is determined according to a length of a bit stream that needs to be fed back under a target configuration, and the first network is a higher level network of the adaptation layer in the encoder.

41. The method according to claim 40, wherein the method further comprises:
in a case where the network device changes the target configuration, transmitting a second request message to the network device, wherein the second request message is used to request a model of an adaptation layer corresponding to changed target configuration.

42. The method according to any one of claims 37 to 39, wherein the encoder deployed on the terminal device supports CSI data with multiple dimensions, and the encoder is implemented by using a fully convolutional neural network.

43. A channel state information (CSI) feedback method, wherein the method is applied to a network device, and the method comprises:
transmitting fourth indication information to a terminal device, wherein the fourth indication information is used to indicate whether an encoder deployed on the terminal device supports CSI data with multiple dimensions.

44. The method according to claim 43, wherein the fourth indication information is transmitted by at least one of the following signalings:
a radio resource control (RRC) signaling, a media access control control element (MAC CE), or downlink control information (DCI).

45. The method according to claim 43, wherein the fourth indication information is carried in a model parameter of the encoder.

46. The method according to any one of claims 43 to 45, wherein the encoder comprises an adaptation layer, an input dimension of the adaptation layer is an output dimension of a first network, an output dimension of the adaptation layer is determined according to a length of a bit stream that needs to be fed back under a target configuration, and the first network is a higher level network of the adaptation layer in the encoder.

47. The method according to claim 46, wherein the method further comprises:
in a case where the network device changes the target configuration, receiving a second request message transmitted by the network device, wherein the second request message is used to request a model of an adaptation layer corresponding to changed target configuration.

48. The method according to any one of claims 43 to 45, wherein the encoder deployed on the terminal device supports CSI data with multiple dimensions, and the encoder is implemented by using a fully convolutional neural network.

49. A terminal device, comprising:
a processing unit, configured to process first input information to obtain target input information, wherein the first input information is CSI data obtained based on a target configuration, and a dimension of the target input information is the same as a dimension of CSI data obtained based on a reference configuration;
the processing unit further configured to encode the target input information based on an encoder to obtain a target bit stream; and
a communication unit, configured to transmit the target bit stream to a network device;
wherein the encoder comprises an adaptation layer, an input dimension of the adaptation layer is an output dimension of a first network, an output dimension of the adaptation layer is determined according to a length of a bit stream that needs to be fed back under the target configuration, and the first network is a higher level network of the adaptation layer in the encoder.

50. A network device, comprising:
a communication unit, configured to receive a target bit stream transmitted by a terminal device, wherein the target bit stream is a bit stream that needs to be fed back under a target configuration;
a processing unit, configured to decode the target bit stream based on a decoder to obtain first output information, wherein a dimension of the first output information is the same as a dimension of CSI data obtained based on a reference configuration; and
process the first output information to obtain target output information, wherein a dimension of the target output information is the same as a dimension of CSI data obtained based on the target configuration;
wherein the decoder comprises an adaptation layer, an input dimension of the adaptation layer is determined according to a length of the bit stream that needs to be fed back under the target configuration, an output dimension of the adaptation layer is an input dimension of a second network, and the second network is a lower level network of the adaptation layer in the decoder.

51. A terminal device, comprising:
a communication unit, configured to receive fourth indication information transmitted by a network device, wherein the fourth indication information is used to indicate whether an encoder deployed on the terminal device supports CSI data with multiple dimensions.

52. A network device, comprising:
a communication unit, configured to transmit fourth indication information to a terminal device, wherein the fourth indication information is used to indicate whether an encoder deployed on the terminal device supports CSI data with multiple dimensions.

53. A terminal device, comprising a processor and a memory, wherein the memory is configured to store a computer program, and the processor is configured to call and run the computer program stored in the memory, to perform the method according to any one of claims 1 to 17, or the method according to any one of claims 37 to 42.

54. A network device, comprising a processor and a memory, wherein the memory is configured to store a computer program, and the processor is configured to call and run the computer program stored in the memory, to perform the method according to any one of claims 18 to 36, or the method according to any one of claims 43 to 48.

55. A chip, comprising a processor, configured to call a computer program from a memory and run the computer program, to cause a device equipped with the chip to perform the method according to any one of claims 1 to 17, the method according to any one of claims 18 to 36, the method according to any one of claims 37 to 42, the method according to any one of claims 43 to 48.

56. A computer-readable storage medium, configured to store a computer program, wherein the computer program causes a computer to perform the method according to any one of claims 1 to 17, the method according to any one of claims 18 to 36, the method according to any one of claims 37 to 42, the method according to any one of claims 43 to 48.

57. A computer program product, comprising computer program instructions, wherein the computer program instructions cause a computer to perform the method according to any one of claims 1 to 17, the method according to any one of claims 18 to 36, the method according to any one of claims 37 to 42, the method according to any one of claims 43 to 48.

58. A computer program, wherein the computer program causes a computer to perform the method according to any one of claims 1 to 17, the method according to any one of claims 18 to 36, the method according to any one of claims 37 to 42, the method according to any one of claims 43 to 48.
